(19) Europäisches Patentamt
European Patent Office
Office européen des brevets

(11) **EP 3 601 852 B1**

(12) **EUROPÄISCHE PATENTSCHRIFT**

(45) Veröffentlichungstag und Bekanntmachung des Hinweises auf die Patenterteilung:
**08.09.2021   Patentblatt 2021/36**

(21) Anmeldenummer: **18716897.6**

(22) Anmeldetag: **08.03.2018**

(51) Int Cl.:
**F16J 9/08** *(2006.01)*          **F16J 9/20** *(2006.01)*
**F02F 5/00** *(2006.01)*

(86) Internationale Anmeldenummer:
**PCT/EP2018/055761**

(87) Internationale Veröffentlichungsnummer:
**WO 2018/172091 (27.09.2018 Gazette 2018/39)**

(54) **FLATTER-UNTERDÜCKUNGS KOLBENRING**

FLUTTER-SUPPRESSION PISTON RING

SEGMENT DE PISTON ANTI-FLOTTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2017   DE 102017105952**

(43) Veröffentlichungstag der Anmeldung:
**05.02.2020   Patentblatt 2020/06**

(73) Patentinhaber: **Federal-Mogul Burscheid GmbH**
**51399 Burscheid (DE)**

(72) Erfinder:
• **MITTLER, Richard**
**51399 Burscheid (DE)**
• **GRAY, Nigel**
**51381 Leverkusen (DE)**

(74) Vertreter: **Becker & Kurig Partnerschaft Patentanwälte PartmbB**
**Bavariastraße 7**
**80336 München (DE)**

(56) Entgegenhaltungen:
EP-A1- 1 431 631          WO-A1-2014/194875
WO-A1-2016/136202      WO-A1-2016/143315
DE-A1-102014 108 973   DE-C1- 3 538 978
US-A- 3 337 938          US-A- 3 727 927
US-A- 4 040 637

## Beschreibung

### Gebiet der Erfindung

Die vorliegende Erfindung betrifft Kolbenringe für Verbrennungskraftmaschinen, insbesondere Verdichtungs- bzw. Kompressionskolbenringe.

### Stand der Technik

Bei höheren Motordrehzahlen werden Verdichtungsringe in der zweiten Kolbenringnut instabil, d.h. der Ring beginnt in radialer und/oder axialer Richtung zu Flattern, was dazu führt, dass Gase durch einen dadurch entstehenden Spalt zwischen Zylinderwand und Kolbenlauffläche strömen können (Blow-By). Radiales oder axiales Ringflattern wird durch einen Druckanstieg vor dem Ring verursacht, wenn der Kolbenring durch Trägheitskräfte an der oberen Flanke gehalten wird. Gewöhnliche Ringausführungen, die einen positiven oder negativen Twist aufweisen, beheben dieses Problem nicht.

Aus der internationalen Patentanmeldung WO 2016/143315 A1 ist ein dreiteiliger Ölabstreifring bekannt dessen Abstreifringe eine besondere Ölabstreifkontur aufweisen, die mit einer flachen Fase an einer Außenkante zwischen einer oberen Ringflanke und einer äußeren Abstreiffläche versehen ist. WO 2016/143315 A1 offenbart einen Kolbenring gemäß dem Oberbegriff des Anspruchs 2.

Die deutsche Patentschrift DE 3538978 CI offenbart einen Kompressions-Kolbenring unter anderem mit einer umlaufenden Ausnehmung an einer unteren Ringflanke, wobei weitere Ausnehmungen vorgesehen sind, die sich von der umlaufenden Ausnehmung radial nach innen erstrecken. Bei der DE 3538978 CI dienen die Ausnehmungen dazu die Belastung des Rings durch auf ihn wirkende Brenngase zu verringern. DE 3538978 C1 offenbart einen Kolbenring gemäß dem Oberbegriff des Anspruchs 1.

Im Stand der Technik sind Kolbenringe bekannt, die an der oberen, d.h. der brennraumseitigen, Kolbenringflanke Vertiefungen oder Rillen aufweisen. Diese Gestaltung führt jedoch aufgrund der damit einhergehenden Schwächung des Ringes zu einer erhöhten Ringbruch-Gefahr.

Es besteht also Bedarf an einem Kolbenring, der einerseits Ringflattern effektiv unterdrückt und andererseits nicht anfällig für Bruch oder anderen Verschleiß ist.

### Zusammenfassung der Erfindung

Die Aufgabe wird gelöst durch einen Kolbenring, mit den Merkmalen des Anspruchs 1 oder des Anspruchs 2. Weitere vorteilhafte Ausführungen sind in den abhängigen Ansprüchen gegeben.

Ein Kolbenring umfasst eine Kolbenringlauffläche, eine der Kolbenringlauffläche gegenüberliegende Kolbenringinnenseite und eine obere und einer untere Kolbenringflanke, wobei in der oberen Kolbenringflanke mehrere eine Ausnehmungen angeordnet sind, die sich ausgehend von der Kolbenringinnenseite radial nach außen erstrecken, wobei untere Ränder der mehreren Ausnehmungen schräg zur oberen Kolbenringflanke verlaufen, wobei der Kolbenring im eingebauten Zustand einen negativen Twist aufweist, wobei der Kolbenring eine Fase an der Kante zwischen Kolbenringinnenseite und unterer Kolbenringflanke aufweist, sich die mindestens eine Ausnehmung und die Fase von der Kolbenringinnenseite aus in radialer Richtung bis maximal zu einer Position eines Flächenschwerpunktes einer axialen Querschnittsfläche des Kolbenrings erstrecken und die mehreren Ausnehmungen bezogen auf die Kolbenringinnenseite der Fase gegenüberliegen.

Die Aufgabe wird weiter gelöst durch Kolbenring, mit einer Kolbenringlauffläche, einer der Kolbenringlauffläche gegenüberliegenden Kolbenringinnenseite und einer oberen und einer unteren Kolbenringflanke, wobei in der oberen Kolbenringflanke mehrere Ausnehmungen angeordnet sind, die sich ausgehend von der Kolbenringlauffläche radial nach innen erstrecken, wobei untere Ränder der mehreren Ausnehmungen schräg zur oberen Kolbenringflanke verlaufen, wobei der Kolbenring im eingebauten Zustand einen positiven Twist aufweist, wobei der Kolbenring eine Fase an der Kante zwischen Kolbenringinnenseite und oberer Kolbenringflanke aufweist, sich die mehreren Ausnehmungen von der Kolbenringlauffläche aus und die Fase von der Kolbenringinnenseite aus in radialer Richtung bis maximal zu einer Position eines Flächenschwerpunktes einer axialen Querschnittsfläche des Kolbenrings erstrecken und die mehreren Ausnehmungen bezogen auf die obere Kolbenringflanke der Fase gegenüberliegen.

Gemäß einem Aspekt der vorliegenden Erfindung kann zwischen dem unteren Rand der mehreren Ausnehmungen und der oberen Kolbenringflanke ein Winkel zwischen 3° und 30° gebildet werden.

Gemäß einem weiteren Aspekt kann eine radiale Ausdehnung der mehreren Ausnehmungen maximal 75% einer radialen Dicke des Kolbenrings betragen.

Gemäß einem weiteren Aspekt kann ein Quotient eines Gesamtvolumens der mehreren Ausnehmungen und eines Umfangs des Kolbenrings im Bereich 0,04 mm$^2$ - 0,08 mm$^2$ liegen.

Gemäß einem weiteren Aspekt kann der Kolbenring ein Rechteckring, ein Trapezring, ein Minutenring, ein Nasenring oder ein Nasenminutenring sein.

Gemäß einem weiteren Aspekt können maximal 40 Ausnehmungen vorgesehen sein. Gemäß einem weiteren Aspekt weisen die Ausnehmungen jeweils die gleiche Form auf. Gemäß einem weiteren Aspekt können die Ausnehmungen in Umfangrichtung mit gleichmäßigem Abstand zueinander angeordnet sein.

Die Aufgabe wird weiterhin gelöst durch eine Kombination aus einem Kolben mit einer Kolbenringnut und einem Kolbenring gemäß den vorstehenden Merkmalen.

Gemäß einem weiteren Aspekt der Kombination kann die Kolbenringnut eine axiale Höhe aufweisen, die um 0 µm - 50 µm, bevorzugt um 20 µm - 40 µm, größer ist als eine axiale Höhe des Kolbenrings.

Gemäß einem weiteren Aspekt der Kombination kann die axiale Höhe der Kolbenringnut radial nach innen abnehmen.

Gemäß einem weiteren Aspekt der Kombination kann in einem axialen Querschnitt ein Winkel zwischen der oberen und der unteren Kolbenringnutflanke 0,3° - 1° betragen. Gemäß einem weiteren Aspekt der Kombination kann eine axiale Außenhöhe der Kolbenringnut um mindestens 30 µm, bevorzugt um 30 µm - 50 µm, größer sein als eine axiale Innenhöhe der Kolbenringnut.

Im Rahmen dieser Anmeldung wird die dem Brennraum zugewandte Seite auch als obere Seite bezeichnet, die untere Seite ist entsprechend die dem Kurbelgehäuse zugewandte (brennraumabgewandte) Seite. Axial bezieht sich auf eine Richtung parallel zur Achse des ringförmigen Kolbenrings; radial auf eine Richtung senkrecht dazu. Die Axialrichtung entspricht der Axialrichtung eines Kolbens, in dem der Kolbenring verwendet werden soll.

In der folgenden Beschreibung wird die "mindestens eine Ausnehmung" auch vereinfacht als "Ausnehmungen" bezeichnet; der Begriff "Ausnehmungen" schließt also sowohl mehrere Ausnehmungen als auch eine einzelne Ausnehmung mit ein, falls nicht anders vermerkt. Ebenso wird eine Ausnehmung, die an der oberen Kolbenringflanke angeordnet ist und sich ausgehend von der Kolbenringinnenseite radial nach außen erstreckt, vereinfacht als "innenliegende Ausnehmung" bezeichnet und analog eine Ausnehmung, die an der oberen Kolbenringflanke angeordnet ist und sich ausgehend von der Kolbenringlauffläche radial nach innen erstreckt, vereinfacht als "außenliegende Ausnehmung" bezeichnet.

## Kurze Beschreibung der Zeichnung

Im Folgenden werden beispielhafte Ausführungsformen der Erfindung unter Bezug auf die Figuren genauer beschrieben, wobei

Fig. 1A eine Schnittansicht eines Kolbenring gemäß einer Ausführungsform mit innenliegenden Ausnehmungen zeigt;
Fig. 1B eine Schnittansicht eines Kolbenring gemäß einer Ausführungsform mit außenliegenden Ausnehmungen zeigt;
Fig. 2A eine Schnittansicht eines negativ twistenden Kolbenrings mit innenliegenden Ausnehmungen im eingebauten Zustand zeigt;
Fig. 2B eine Schnittansicht eines positiv twistenden Kolbenrings mit außenliegenden Ausnehmungen im eingebauten Zustand zeigt;
Fig. 3 eine perspektivische Detailansicht im eingebauten Zustand eines negativ twistenden Kolbenrings mit Ausnehmungen zeigt;
Fig. 4 eine perspektivische Ansicht eines Kolbenrings mit mehreren Ausnehmungen zeigt; und
Fig. 5 eine Schnittansicht des erfindungsgemäßen Kolbens und Kolbenrings zeigt.

## Ausführliche Beschreibung der Erfindung

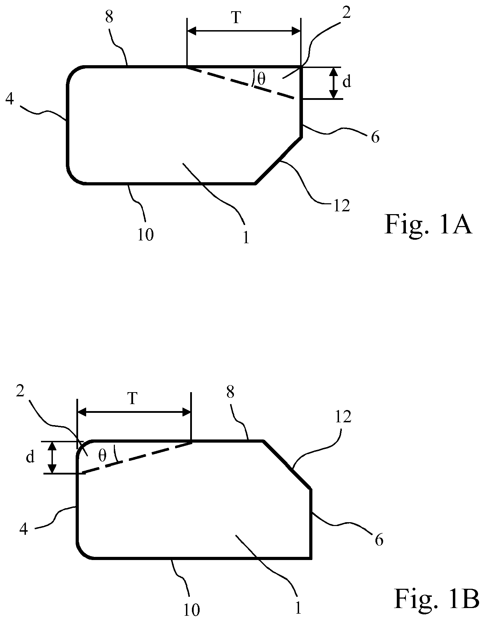

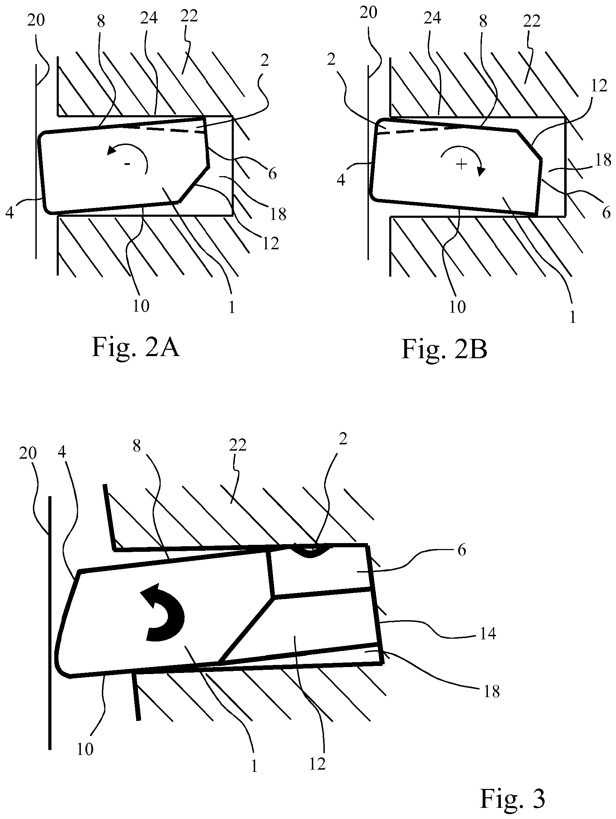

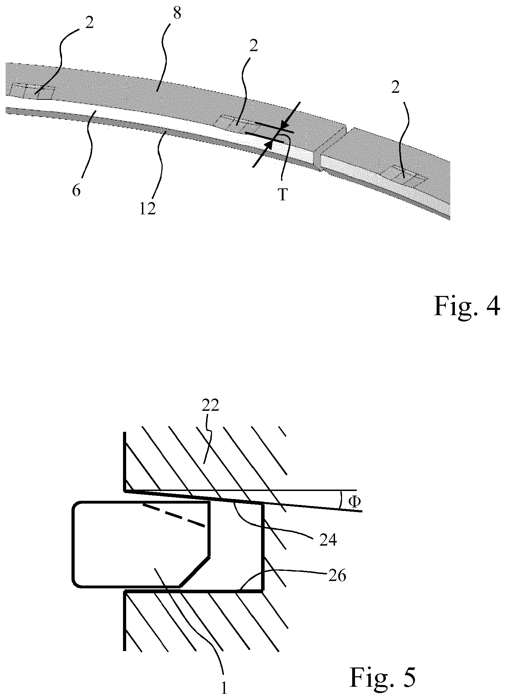

Fig. 1A stellt eine Schnittansicht (der Übersichtlichkeit halber ohne Schraffur) eines Kolbenrings 1 gemäß einer erfindungsgemäßen Ausführungsform dar. Der Kolbenring 1 weist eine Kolbenringlauffläche 4, eine Kolbenringinnenseite 6, eine obere (brennraumseitige) Kolbenringflanke 8 und eine untere (kurbelraumseitige) Kolbenringflanke 10 auf. An der oberen Kolbenringflanke 8 sind mehrere Ausnehmungen 2 angeordnet, die sich ausgehend von der Kolbenringinnenseite 6 radial nach außen erstrecken. Eine Ausnehmung ist durch eine Strichlinie angedeutet. Vgl. Fig. 3 und Fig. 4 für perspektivische Ansichten. Weiter weist der Kolbenring 1 eine Fase 12 an der Kante zwischen unterer Kolbenringflanke 10 und Kolbenringinnenseite 6 auf. Die Fase 12 liegt also bezogen auf die Kolbenringinnenseite 6 der mindestens einen Ausnehmung 2 gegenüber.

Die Fase ist in den Figuren als Abschrägung dargestellt; jedoch soll im Rahmen dieser Anmeldung unter dem Begriff "Fase" allgemeiner eine umlaufende (um den Umfang des Kolbenrings) Aussparung (im axialen Querschnitt) des Kolbenrings zu verstehen sein. Beispielsweise kann im Allgemeinen die Außenkontur des Querschnitts im Bereich der "Fase" außer gerade wie im Fall einer Abschrägung auch (viel-)eckig, gerundet (konkav oder konvex), usw. sein.

Die Ausnehmungen ermöglichen es Verbrennungsgasen zwischen oberer Kolbenringflanke und oberer Flanke einer Kolbennut, in die der Kolbenring 1 eingebaut ist, einfacher als bei einem herkömmlichen Kolbenring hinter (also zur Kolbenringinnenseite) zu gelangen und so den Kolbenring 1 stärker nach außen gegen eine Zylinderwand zu drücken und somit die Dichtwirkung zu verbessern.

Dies ermöglicht es auch, das axiale Spiel, d.h. den Freiraum zwischen Kolbenringflanken und Kolbenringnut-Flanken, sehr klein zu halten. Gegenüber den üblichen 60 - 120 µm ist hier die axiale Höhe des Kolbenrings 1 bevorzugt so an die axiale Höhe der Kolbenringnut angepasst, dass ein Spiel von maximal 50 µm, bevorzugt 20 - 40 µm bleibt. Dadurch wird die Menge an Öl, die zwischen Kolbenringflanken und Kolbenringnut-Flanken hindurch fließen kann, verringert, während Gas durch die mehreren Ausnehmungen strömen kann.

Fig. 1B stellt eine Schnittansicht eines Kolbenrings 1 gemäß einer weiteren erfindungsgemäßen Ausführungsform dar. Diese unterscheidet sich von der in Fig. 1A dargestellten dadurch, dass die mehreren Ausnehmungen 2 nicht innenliegend angeordnet sind sondern außenliegend, und dass die Fase 12 des Kolbenrings 1 an der Kante zwischen oberer Kolbenringflanke 8 und Kolbenringinnenseite 6 angeordnet ist. D.h. die Fase 12 liegt bezogen auf die obere Kolbenringflanke 8 der mehreren Ausnehmungen 2 gegenüber. Die mehreren Ausnehmungen erstrecken sich ausgehend von der Kolbenringlauffläche 4 radial nach innen. Die Anordnung der mehreren Ausnehmungen 2 an der oberen Kolbenringflanke 8 bleibt bestehen. Das oben in Zusammenhang mit Fig. 1A Gesagte gilt auch hier.

Das "Twistverhalten" der in Fig. 1A und Fig. 1B beschriebenen Ausführungsformen wird weiter unten im Zusammenhang mit Fig. 2A und Fig. 2B erläutert. Im Folgenden werden weitere Merkmale und Eigenschaften erfindungsgemäßer Kolbenringe beschrieben, die für beide Ausführungsformen gemäß Fig. 1A und gemäß Fig. 1B gelten.

In radialer Richtung erstrecken sich die Ausnehmungen 2 nicht bis zu der Kolbenringlauffläche 4 (im Falle innenliegender Ausnehmungen) bzw. bis zu der Kolbenringinnenseite 6 (im Falle außenliegender Ausnehmungen), d.h. eine radiale Ausdehnung der Ausnehmungen 2 ist kleiner als eine radiale Dicke (also Wandstärke) des Kolbenrings 1; die Ausnehmungen erstrecken sich bis maximal zu einer Position eines Flächenschwerpunktes einer axialen Querschnittsfläche des Kolbenrings. Bevorzugt wird hier, dass die radiale Ausdehnung T der Ausnehmungen 2 maximal 75%, weiter bevorzugt 50%, weiter bevorzugt 25%, der radialen Dicke des Kolbenrings 1 beträgt. Bevorzugt beträgt die radiale Ausdehnung der Ausnehmungen 2 zwischen 20% und 60%, weiter bevorzugt zwischen 40% und 60%, der radialen Dicke des Kolbenrings 1.

Analog erstreckt sich die Fase 12 in radialer Richtung bis maximal zu der Position des Flächenschwerpunktes der axialen Querschnittsfläche des Kolbenrings. Bevorzugt beträgt die radiale Ausdehnung der Fase 12 maximal 50% der radialen Dicke des Kolbenrings 1.

Die mehreren Ausnehmungen können unterschiedliche Formen aufweisen, denkbar sind z.B. neben Quaderformen bzw. im Querschnitt rechteckigen Formen auch Formen mit Abrundungen oder Formen, die in einem Querschnitt eine Trapez-, Dreieck- oder Kreisabschnittform aufweisen. Die Tiefe (d.h. Ausdehnung in axialer Richtung) der mehreren Ausnehmungen 2 nimmt ausgehend von der Kolbenringinnenseite 6 bzw. der Kolbenringlauffläche 4 in radialer Richtung linear ab, d.h. ein unterer Rand der mehreren Ausnehmungen 2 verläuft schräg zur oberen Kolbenringflanke 8. Die Verringerung der Tiefe erfolgt bevorzugt so, dass eine Schräge mit einem Winkel θ zwischen 3° und 30°, weiter bevorzugt zwischen 10° und 20°, gebildet wird. Das heißt, der untere Rand der Ausnehmungen 2 verläuft bevorzugt in dem Winkel θ zwischen 3° und 30°, weiter bevorzugt zwischen 10° und 20°, relativ zu der oberen Kolbenringflanke 8. Selbstverständlich können an einem Kolbenring auch verschiedene Formen der Ausnehmungen gleichzeitig Anwendung finden.

Es werden bevorzugt maximal 40 Ausnehmungen, angeordnet. Die Ausnehmungen sind in Umfangrichtung bevorzugt regelmäßig angeordnet, d.h. die Ausnehmungen befinden sich in gleichmäßigem Abstand zueinander.

Die Gesamtfläche (Gesamtquerschnittsfläche der durch die Ausnehmungen gebildeten Durchgänge in radialer Richtung betrachtet), gemessen an der Kolbenringinnenseite bzw. der Kolbenringlauffläche, der Ausnehmungen sollte mindestens 20 μm mal den Kolbenringumfang betragen. D.h., falls alle Ausnehmungen die gleiche, im Querschnitt rechteckige Form aufweisen, gilt die folgende Flächenformel

$$L \cdot d \cdot N \geq \pi \cdot D \cdot 20 \mu m$$

wobei N die Anzahl der Ausnehmungen, L die Länge der Ausnehmungen in Umfangrichtung, d die axiale Tiefe der Ausnehmungen (beides gemessen an der Kolbenringinnenseite bzw. der Kolbenringlauffläche) und D der Durchmesser des Kolbenrings, gemessen an der Kolbenringinnenseite im Falle innenliegender Ausnehmungen bzw. an der Kolbenringlauffläche im Falle außenliegender Ausnehmungen, ist. Diese Bedingung sollte analog eingehalten werden, wenn die Ausnehmungen unterschiedliche Formen aufweisen, d.h.

$$F_g \geq \pi \cdot D \cdot 20 \mu m$$

wobei $F_g$ die an der Kolbenringinnenseite bzw. der Kolbenringlauffläche gemessene Gesamtfläche der Ausnehmungen bezeichnet.

Die Gesamtzahl der Ausnehmungen kann an die jeweiligen Anforderungen angepasst werden. Z.B. ist es bei einem Kolbenring, mit einem Durchmesser im Bereich von 60 mm bis 150 mm möglich, eine kleine Anzahl relativ breiter Ausnehmungen mit einer Länge in Umfangrichtung größer 20 mm anzuordnen, oder auch eine größere Anzahl relativ schmaler Ausnehmungen mit einer Länge kleiner 10 mm anzuordnen.

Bezeichnet T die Distanz über die sich die Ausnehmungen in radialer Richtung erstrecken, d.h. die radiale Ausdehnung der Ausnehmungen, gilt bevorzugt die folgende Volumenformel:

$$T \cdot L \cdot d \cdot N \geq \pi \cdot D \cdot 0{,}04 mm^2$$

wobei wie oben bei der Flächenformel angenommen wird, dass die Ausnehmungen in radialer Richtung betrachtet einen rechteckigen Querschnitt aufweisen und die axiale Tiefe der Ausnehmungen in etwa linear abnimmt, ausgehend von der Kolbenringinnenseite bzw. der Kolbenringlauffläche (dass also eine Schräge wie oben beschrieben gebildet wird).

Weisen die Ausnehmungen in radialer Richtung betrachtet keinen rechteckigen Querschnitt auf, sondern eine andere Form, und nimmt die axiale Tiefe der Ausnehmungen in radialer Richtung linear ab (wie oben), so gilt allgemeiner:

$$2 \cdot V \cdot N \geq \pi \cdot D \cdot 0{,}04 \mathrm{mm}^2$$

wobei V das Volumen einer einzelnen Ausnehmung bezeichnet. Weisen verschiedene Ausnehmungen unterschiedliche Formen auf, gilt:

$$2 \cdot V_g \geq \pi \cdot D \cdot 0{,}04 \mathrm{mm}^2$$

wobei $V_g$ das Gesamtvolumen aller Ausnehmungen bezeichnet (wieder unter Annahme einer im Wesentlichen linearen Abnahme der axialen Tiefe der Ausnehmungen). Bevorzugt liegt $V_g$ im Bereich von $\pi \cdot D \cdot 0{,}04\mathrm{mm}^2$ bis $\pi \cdot D \cdot 0{,}08\mathrm{mm}^2$, d.h., anders gesagt, ein Quotient des Gesamtvolumens $V_g$ der Ausnehmungen 2 und des Umfangs $\pi \cdot D$ des Kolbenrings liegt im Bereich von 0,04 mm$^2$ bis 0,08 mm$^2$.

Fig. 2A und Fig. 2B zeigen erfindungsgemäße Kolbenringe im eingebauten Zustand, d.h. wenn der Kolbenring unter Spannung steht. Dabei tritt ein sogenannter "Twist" auf, dessen Zusammenwirken mit den Ausnehmungen im Folgenden erläutert wird. Der Kolbenring der in Fig. 2A dargestellt ist entspricht dem Kolbenring der Fig. 1A und der Kolbenring der in Fig. 2B dargestellt ist entspricht dem Kolbenring der Fig. 1B. Die vorstehend im Zusammenhang mit Fig. 1A und Fig. 1B gemachten Ausführungen sind entsprechend für die in Fig. 2A bzw. Fig. 2B dargestellten Kolbenringe gültig. Dementsprechend wird im Folgenden lediglich das für das Zusammenwirken mit dem Twist Relevante beschrieben; für die weitern Merkmale/Eigenschaften wird auf die vorstehenden Ausführungen verwiesen.

In Fig. 2A ist eine Ansicht eines negativ twistenden Kolbenrings (der dem Kolbenring der Fig. 1A entspricht) im eingebauten Zustand dargestellt. Der Kolbenring 1 ist in eine Kolbenringnut eines Kolbens 22 eingebaut, wobei eine Zylinderwand 20 angedeutet ist, an der der Kolbenring anliegt. "Negativ twistend" heißt, dass der Kolbenring außen abwärts kippt, wenn er im eingebauten Zustand unter Spannung steht. Ein solches "Twistverhalten" wird durch eine Querschnittsstörung verursacht, die bei Kolbenringen z.B. durch Anbringen einer Fase bzw. einer umlaufenden Aussparung an der Ringkante zwischen Kolbenringinnenseite 6 und einer der Kolbenringflanken erzeugt wird. Am Kolbenring 1 der Figur ist eine solche Fase 12 an der unteren Seite (also an der Kante zwischen Kolbenringinnenseite 6 und unterer Kolbenringflanke 10) angebracht, was zu einem sogenannten "negativen Twist" führt (in der in der Figur gezeigten Ansicht ist dies ein durch einen Pfeil angedeutetes Verdrehen entgegen dem Uhrzeigersinn). Der negative Twist führt dazu, dass die obere Kolbenringinnenkante an der oberen Flanke 24 der Kolbenringnut anliegt. In diesem Fall sind die Ausnehmungen 2 an der oberen Kolbenringflanke 8 innenliegend angeordnet, also dort, wo der Kolbenring 1 an der oberen Flanke 24 der Kolbenringnut anliegt.

Eine Fase an der oberen Kante der Kolbenringinnenseite 6 führt entsprechend zu einem "positiven Twist" im eingebauten Zustand. Dies ist beispielhaft in Fig. 2B dargestellt, die den Kolbenring gemäß der Fig. 1B im eingebauten Zustand darstellt. Bei dem positiv twistenden Kolbenring 1 sind die Ausnehmungen 2 (wie in der Figur) in der oberen Kolbenringflanke 8 außenliegend angeordnet. Das Verdrehen des Kolbenrings (in Fig. 2B wieder durch einen Pfeil angedeutet), wenn er unter Spannung steht, führt dazu, dass die obere Kolbenringflanke 8 an der oberen äußeren Kante der Kolbenringnut anliegt, also dort wo die Ausnehmungen 2 angeordnet sind.

In beiden Fällen, positiver/negativer Twist, sind die Ausnehmungen 2 jeweils so angeordnet, dass sie sich dort befinden, wo der Kolbenring 1 an der oberen Kolbennutflanke 24 anliegt. Die Ausnehmungen 2 bilden also Durchgänge für Verbrennungsgase, so dass diese hinter den Kolbenring 1 gelangen können, d.h. sie können in den Bereich 18 zwischen Kolbenringinnenseite und Kolbenringnutgrund gelangen. Die oben in Zusammenhang mit Fig. 1A und Fig. 1B gemachten Ausführungen sind auch für Fig. 2A und Fig. 2B gültig; insbesondere die Aussagen zu den Abmessungen und Flächen-Nolumenformel.

Es ist auch denkbar, die Ausnehmungen in unregelmäßigen Abständen anzuordnen, um einen ungleichmäßigen Twist auszugleichen, da auch die Ausnehmungen das Twistverhalten beeinflussen.

Fig. 3 und Fig. 4 stellen perspektivischen Ansichten einer erfindungsgemäßen Ausführungsform dar, die derjenigen der Fig. 1A und Fig. 2A entspricht. Wie insbesondere in Fig. 4 zu erkennen ist, stellen die Ausnehmungen 2 einen Durchgang zwischen dem äußeren Bereich zwischen Zylinderwand 20 und Kolben 22 und dem Bereich 18 zwischen Kolbenringinnenseite 6 und Kolbenringnutgrund 14 her, dadurch wird es Verbrennungas ermöglicht in den radial inneren Bereich 18 zwischen Kolbenringinnenseite 6 und Kolbenringnutgrund 14 zu strömen. Durch den Druck des Gases wird eine Kraft radial nach außen auf den Kolbenring 1 erzeugt, die die Kolbenringlauffläche 4 an eine Zylinderwand drückt, so dass Ringflattern in radialer Richtung unterdrückt wird.

In Fig. 4 ist ein Ausschnitt des Kolbenrings 1 perspektivisch dargestellt, wobei hier zu erkennen ist, dass in Umfangrichtung mehrere Ausnehmungen 2 angeordnet sind.

Kolbenringe gemäß der vorliegenden Erfindung sind insbesondere für einen zweiten Verdichtungsring vorgesehen. Ein solcher ist bevorzugt als Rechteckring, Trapezring, Minutenring, Nasenring oder Nasenminutenring ausgeführt. Ein erfindungsgemäßer Kolbenring wird bevorzugt in einer trapezförmigen Kolbenringnut verwendet, welche sich radial nach außen erweitert, wobei zwischen den Kolbenringnut-Flanken ein Winkel von 0,3° bis 1° gebildet wird.

Fig. 5 stellt eine Kombination eines Kolbens 22 mit einem Kolbenring 1 dar. Bei dem Kolbenring 1 handelt es sich um einen erfindungsgemäßen Kolbenring wie vorstehend beschrieben. Beispielhaft ist ein Kolbenring mit innenliegenden Ausnehmungen (vgl. Fig. 1A) dargestellt, es kann aber auch jede andere Ausführungsform Verwendung finden. Auf Bezugszeichen wurde größtenteils verzichtet, um nur die wesentlichen Merkmale darzustellen.

Der Kolben 22 weist eine Kolbenringnut auf, wobei noch andere Kolbenringnuten für weitere Kolbenringe vorhanden sein können. Eine axiale Höhe der Kolbenringnut ist um 0 - 50 µm, bevorzugt um 20 - 40 µm, größer als eine axiale Höhe des Kolbenrings.

Die Flanken der Kolbenringnut verlaufen nicht parallel, sondern ihr Abstand nimmt radial nach innen ab, wobei ein Winkel $\Phi$ zwischen den Kolbenringnutflanken gebildet wird. Beispielhaft verläuft hier die untere Kolbenringnutflanke 24 parallel zur Radialrichtung (d.h. senkrecht zur Axialrichtung) während die obere Kolbenringnutflanke 26 nicht parallel dazu verläuft. Allgemein können beide oder nur eine (obere oder untere) Kolbenringnutflanke(n) 24, 26 nicht parallel zu Radialrichtung verlaufen. Der Winkel $\Phi$ bezeichnet den Winkel zwischen den beiden Kolbenringnutflanken, also nicht, wie der Einfachheit halber in der Figur gezeichnet, den Winkel zwischen oberer Kolbenringnutflanke und Radialrichtung, was allerdings im gezeichneten Beispiel übereinstimmt. Der Winkel $\Phi$ liegt bevorzugt zwischen 0,3° und 1°. Eine äußere axiale Höhe (axiale Außenhöhe) der Kolbenringnut ist bevorzugt um mindestens 30 µm, weiter bevorzugt um 30 - 50 µm, größer als eine innere axiale Höhe (axiale Innenhöhe) der Kolbenringnut.

**Bezugszeichenliste:**

| 1 | Kolbenring |
| 2 | Ausnehmung |
| 4 | Kolbenringlauffläche |
| 6 | Kolbenringinnenseite |
| 8 | obere Kolbenringflanke |
| 10 | untere Kolbenringflanke |
| 12 | Fase |
| 14 | Kolbenringnutgrund |
| 18 | Bereich zwischen Kolbenringinnenseite und Kolbenringnutgrund |
| 20 | Zylinderwand |
| 22 | Kolben |
| 24 | obere Kolbenringnutflanke |
| 26 | untere Kolbenringnutflanke |

**Patentansprüche**

1. Kolbenring (1), mit einer Kolbenringlauffläche (4), einer der Kolbenringlauffläche gegenüberliegenden Kolbenringinnenseite (6) und einer oberen und einer unteren Kolbenringflanke (8, 10),

   wobei der Kolbenring eine Fase (12) an der Kante zwischen Kolbenringinnenseite (6) und unterer Kolbenringflanke (10) aufweist, wobei in der oberen Kolbenringflanke (8) mehrere Ausnehmungen (2) angeordnet sind, die sich ausgehend von der Kolbenringinnenseite (6) radial nach außen erstrecken,
   wobei sich die mehreren Ausnehmungen (2) und die Fase (12) von der Kolbenringinnenseite (6) aus in radialer Richtung bis maximal zu einer Position eines Flächenschwerpunktes einer axialen Querschnittsfläche des Kolbenrings erstrecken und die mehreren Ausnehmungen (2) bezogen auf die Kolbenringinnenseite (6) der Fase (12) gegenüberliegen,
   **dadurch gekennzeichnet, dass** ein unterer Rand der mehreren Ausnehmungen (2) schräg zur oberen Kolbenringflanke (8) verläuft, wobei der Kolbenring (1) im eingebauten Zustand einen negativen Twist aufweist.

2. Kolbenring (1), mit einer Kolbenringlauffläche (4), einer der Kolbenringlauffläche gegenüberliegenden Kolbenringinnenseite (6) und einer oberen und einer unteren Kolbenringflanke (8, 10),

   wobei der Kolbenring eine Fase (12) an der Kante zwischen Kolbenringinnenseite (6) und oberer Kolbenringflanke (8) aufweist,
   **dadurch gekennzeichnet, dass** in der oberen Kolbenringflanke (8) mehrere Ausnehmungen (2) angeordnet sind, die sich ausgehend von der Kolbenringlauffläche (4) radial nach innen erstrecken,
   wobei ein unterer Rand der mehreren Ausnehmungen (2) schräg zur oberen Kolbenringflanke (8) verläuft, wobei der Kolbenring (1) im eingebauten Zustand einen positiven Twist aufweist, wobei sich die mehreren Ausnehmungen (2) von der Kolbenringlauffläche (4) aus und die Fase (12) von der Kolbenringinnenseite (6) aus in radialer Richtung bis maximal zu einer Position eines Flächenschwerpunktes einer axialen Querschnittsfläche des Kolbenrings erstrecken und die mehreren Ausnehmungen (2) bezogen auf die obere Kolbenringflanke (8) der Fase (12) gegenüberliegen.

3. Kolbenring (1) gemäß Anspruch 1 oder 2, wobei zwischen dem unteren Rand der mehreren Ausnehmungen (2) und der oberen Kolbenringflanke (8) ein

**4.** Kolbenring (1) gemäß einem der vorstehenden Ansprüche, wobei eine radiale Ausdehnung der mehreren Ausnehmungen (2) maximal 75% einer radialen Dicke des Kolbenrings beträgt.

**5.** Kolbenring (1) gemäß einem der vorstehenden Ansprüche, wobei ein Quotient eines Gesamtvolumens ($V_g$) der mehreren Ausnehmungen (2) und eines Umfangs ($\pi$D) des Kolbenrings im Bereich 0,04 mm$^2$ - 0,08 mm$^2$ liegt.

**6.** Kolbenring (1) gemäß einem der vorstehenden Ansprüche, wobei der Kolbenring (1) ein Rechteckring, ein Trapezring, ein Minutenring, ein Nasenring oder ein Nasenminutenring ist.

**7.** Kolbenring (1) gemäß einem der vorstehenden Ansprüche, wobei maximal 40 Ausnehmungen vorgesehen sind.

**8.** Kolbenring (1) gemäß einem der Ansprüche 1 bis 7, wobei die Ausnehmungen (2) jeweils die gleiche Form aufweisen.

**9.** Kolbenring (1) gemäß einem der Ansprüche 1-8, wobei die Ausnehmungen (2) in Umfangrichtung mit gleichmäßigem Abstand zueinander angeordnet sind.

**10.** Kombination aus einem Kolben (22) mit einer Kolbenringnut und einem Kolbenring (1) gemäß einem der vorstehenden Ansprüche 1-9.

**11.** Kombination gemäß Anspruch 10, wobei die Kolbenringnut eine axiale Höhe aufweist, die um 0 $\mu$m - 50 $\mu$m, bevorzugt um 20 $\mu$m - 40 $\mu$m, größer ist als eine axiale Höhe des Kolbenrings.

**12.** Kombination gemäß einem der Ansprüche 10-11, wobei die axiale Höhe der Kolbenringnut radial nach innen abnimmt.

**13.** Kombination gemäß Anspruch 12, wobei in einem axialen Querschnitt ein Winkel ($\Phi$) zwischen der oberen und der unteren Kolbenringnutflanke 0,3° - 1° beträgt.

**14.** Kombination gemäß einem der Ansprüche 12-13, wobei eine axiale Außenhöhe der Kolbenringnut um mindestens 30 $\mu$m, bevorzugt um 30 $\mu$m - 50 $\mu$m, größer ist als eine axiale Innenhöhe der Kolbenringnut.

**Claims**

**1.** A piston ring (1), comprising a piston ring bearing surface (4), a piston ring interior (6) opposite the piston ring bearing surface and an upper and a lower piston ring flank (8, 10), wherein the piston ring has a chamfer (12) at the edge between piston ring interior (6) and lower piston ring flank (10),

wherein several recesses (2) are arranged in the upper piston ring flank (8), extending radially outwardly starting from the piston ring interior (6),
wherein the several recesses (2) and the chamfer (12) extend from the piston ring interior (6) in radial direction to at most a position of a center of area of an axial cross-sectional area of the piston ring and the several recesses (2) face the chamfer (12) with respect to the piston ring interior (6),
**characterized in that**
a lower edge of the several recesses (2) runs obliquely to the upper piston ring flank (8), wherein the piston ring (1) has a negative twist in the installed state.

**2.** The piston ring (1) having a piston ring bearing surface (4), a piston ring interior (6) facing the piston ring bearing surface and an upper and a lower piston ring flank (8, 10),

wherein the piston ring has a chamfer (12) at the edge between piston ring interior (6) and upper piston ring flank (8),
**characterized in that**
several recesses (2) are arranged in the upper piston ring flank (8), extending radially inwardly starting from the piston ring bearing surface (4), wherein a lower edge of the several recesses (2) runs obliquely to the upper piston ring flank (8), wherein the piston ring (1) has a positive twist in the installed state, wherein the several recesses (2) extend from the piston ring bearing surface (4) and the chamfer (12) from the piston ring interior (6) in radial direction to at most a position of a center of area if an axial cross-sectional area of the piston ring and the several recesses (2) face the chamfer (12) with respect to the upper piston ring flank (8).

**3.** The piston ring (1) according to claim 1 or 2, wherein an angle between 3 ° and 30 ° is formed between the lower edge of the several recesses (2) and the upper piston ring flank (8).

**4.** The piston ring (1) according to any one of the preceding claims, wherein a radial extent of the several recesses (2) is at most 75 % of a radial thickness of the piston ring.

5. The piston ring (1) according to any one of the preceding claims, wherein a quotient of a total volume ($V_{tot}$) of the several recesses (2) and a circumference ($\pi D$) of the piston ring is in the range of 0.04 mm$^2$-0.08 mm$^2$.

6. The piston ring (1) according to any one of the preceding claims, wherein the piston ring (1) is a rectangular ring, a trapezoidal ring, a minute ring, a nose ring or a nose minute ring.

7. The piston ring (1) according to any one of the preceding claims, wherein at most 40 recesses are provided.

8. The piston ring (1) according to any one of claims 1 to 7, wherein the recesses (2) each have the same shape.

9. The piston ring (1) according to any one of claims 1-8, wherein the recesses (2) are arranged evenly spaced from one another in circumferential direction.

10. A combination of a piston (22) with a piston ring groove and a piston ring (1) according to any one of claims 1-9.

11. The combination according to claim 10, wherein the piston ring groove has an axial height which is 0 $\mu$m-50 $\mu$m, preferably 20 $\mu$m-40 $\mu$m greater than an axial height of the piston ring.

12. The combination according to any one of claims 10-11, wherein the axial height of the piston ring groove decreases radially inwardly.

13. The combination according to claim 12, wherein an angle ($\phi$) between the upper and the lower piston ring groove flank in an axial cross-section is 0.3 °-1 °.

14. The combination according to any one of claims 12-13, wherein an axial outside height of the piston ring groove is at least 30 $\mu$m, preferably 30 $\mu$m-50 $\mu$m greater than an axial inside height of the piston ring groove.

**Revendications**

1. Segment de piston (1), ayant une surface (4) de glissement de segment de piston, un côté interne (6) de segment de piston opposé à la surface de glissement de segment de piston, et des flancs (8, 10) de segment de piston supérieur et inférieur,

   le segment de piston ayant un chanfrein (12) sur le bord situé entre le côté interne (6) de segment de piston et le flanc inférieur (10) de segment de piston,

une pluralité d'évidements (2) étant aménagée dans le flanc supérieur (8) de segment de piston, lesquels évidements s'étendent radialement vers l'extérieur depuis le côté interne (6) de segment de piston,

la pluralité d'évidements (2) et le chanfrein (12) s'étendant depuis le côté interne (6) de segment de piston dans la direction radiale jusqu'au plus une position d'un centre de gravité d'une surface de section transversale axiale du segment de piston, et les évidements de la pluralité d'évidements (2) sont opposés au chanfrein (12) par rapport au côté interne (6) de segment de piston, **caractérisé en ce qu'**un bord inférieur de la pluralité d'évidements (2) s'étend obliquement vers le flanc supérieur (8) de segment de piston, le segment de piston (1) ayant une torsion négative à l'état monté.

2. Segment de piston (1), ayant une surface (4) de glissement de segment de piston, un côté intérieur (6) de segment de piston opposé à la surface de glissement de segment de piston, et des flancs (8, 10) de segment de piston supérieur et inférieur,

   le segment de piston ayant un chanfrein (12) sur le bord situé entre le côté interne (6) de segment de piston et le flanc supérieur (8) de segment de piston, **caractérisé en ce qu'**une pluralité d'évidements (2) est aménagée dans le flanc supérieur (8) de segment de piston, lesquels évidements (2) s'étendent radialement vers l'intérieur depuis la surface de glissement (4) de segment de piston,
   un bord inférieur de la pluralité d'évidements (2) s'étendant de façon oblique vers le flanc supérieur (8) de segment de piston, le segment de piston (1) ayant une torsion positive à l'état monté, la pluralité d'évidements (2) s'étendant depuis la surface de glissement (4) de segment de piston et le chanfrein (12) s'étendant depuis le côté interne (6) de segment de piston dans la direction radiale jusqu'au plus une position d'un centre de gravité d'une surface de section transversale axiale du segment de piston, et les évidements de la pluralité d'évidements (2) sont opposés au chanfrein (12) par rapport au flanc supérieur (8) de segment de piston.

3. Segment de piston (1) selon la revendication 1 ou la revendication 2, dans lequel un angle entre 3° et 30° est formé entre le bord inférieur de la pluralité d'évidements (2) et le flanc supérieur (8) de segment de piston.

**4.** Segment de piston (1) selon l'une quelconque des revendications précédentes, dans lequel une extension radiale de la pluralité d'évidements (2) est au plus égale à 75% d'une épaisseur radiale du segment de piston.

**5.** Segment de piston (1) selon l'une quelconque des revendications précédentes, dans lequel le quotient du volume total ($V_g$) de la pluralité d'évidements (2) et de la circonférence ($\pi$D) du segment de piston est compris entre 0,04 mm$^2$ et 0,08 mm$^2$.

**6.** Segment de piston (1) selon l'une quelconque des revendications précédentes, dans lequel le segment de piston (1) est un segment rectangulaire, un segment trapézoïdal, un segment minutes, un segment de nez ou un segment minutes de nez.

**7.** Segment de piston (1) selon l'une quelconque des revendications précédentes, dans lequel un maximum de 40 évidements sont prévus.

**8.** Segment de piston (1) selon l'une quelconque des revendications 1 à 7, dans lequel les évidements (2) ont chacun la même forme.

**9.** Segment de piston (1) selon l'une quelconque des revendications 1 à 8, dans lequel les évidements (2) sont disposés à une distance uniforme les uns des autres dans la direction circonférentielle.

**10.** Combinaison d'un piston (22) ayant une gorge à segment de piston et d'un segment de piston (1) selon l'une quelconque des revendications précédentes 1 à 9.

**11.** Combinaison selon la revendication 10, dans laquelle la gorge à segment de piston a une hauteur axiale supérieure à une hauteur axiale du segment de piston, de 0 $\mu$m à 50 $\mu$m, de préférence de 20 $\mu$m à 40 $\mu$m.

**12.** Combinaison selon l'une quelconque des revendications 10 à 11, dans laquelle la hauteur axiale de la gorge à segment de piston diminue radialement vers l'intérieur.

**13.** Combinaison selon la revendication 12, dans laquelle, selon une section transversale axiale, un angle ($\Phi$) entre les flancs supérieur et inférieur de gorge à segment de piston est de 0,3° - 1°.

**14.** Combinaison selon l'une quelconque des revendications 12 à 13, dans laquelle une hauteur extérieure axiale de la gorge à segment de piston est supérieure à une hauteur intérieure axiale de la gorge à segment de piston d'au moins 30 $\mu$m, de préférence de 30 $\mu$m à 50 $\mu$m.

Fig. 1A

Fig. 1B

Fig. 2A

Fig. 2B

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016143315 A1
- DE 3538978
- DE 3538978 C1